# EUROPEAN PATENT APPLICATION

(11) **EP 0 553 603 A1**
(43) Date of publication of application: **04.08.1993**
(21) Application number: 92830687.7
(22) Date of filing: 23.12.1992
(51) Int. Cl.: A23B 7/005, A23B 7/148

(54) **A procedure for the treatment and retail packing of fruit, in particular pineapples**

(30) Priority: 29.01.1992 IT MO920011
(71) Applicant: GHISETTI 1870 S.r.l., I-41100 Modena (IT)
(72) Inventor: Cancarini Ghisetti, Pietro, I-41100 Modena (IT)
(74) Representative: Lanzoni, Luciano

(57) **Abstract**

The invention relates to a treatment and packing procedure for fruit retail, in particular pineapples. The procedure envisages, after the preparation of the fruit including its cutting into preestablished shapes according to its nature, its vacuum packing in sealed bags and its subsequent pasteurising at a temperature of about 90 degrees, for a time comprised between fifteen and forty minutes. Cooling follows pasteurisation, with the use of cold water, and finally the produce is conserved in a refrigerating cell at a temperature comprised between 4 and 8 degrees.

## Description

The invention relates to a procedure for the treatment and retail packing of fruit, in particular pineapples.

For some kinds of fruit and vegetable produce, the known and practised ways of preparing the produce, which permit good conservation for sufficiently long periods, can be summarised as follows:
- sterilisation, which gives long life to the produce, but has some negative effects on the taste and organic qualities of fresh produce, apart from causing a certain reduction in the vitamin content of the produce itself;
- deep-freezing of the produce, again permitting long life, if the conservation is done at a prescribed temperature, but not suitable for fruits such as, for example, pineapples;
- packing in metallic cons, which permits once again a long life to the produce, even if, for some kinds of produce, it brings about a noticeable loss in taste with respect to the fresh produce.

In the particular case of pineapples, the only known way of packing for conservation is that of using metal cans.

The system envisages, in the case of pineapples, that the product is added to in the can with liquid. Conservation performed in this way is of good quality, but produces a modification in the organic qualities of the fruit.

The invention, as it is characterised in the claims which follow, proposes to obviate the above-mentioned prior art drawbacks by means of a treatment and packing system for the sale of the produce which leaves its organic characteristics substantially unchanged: that is, at consumption the produce still presents the taste characteristics of the fruit when it is fresh.

A further aim of the invention is to provide a natural produce, that is, free of additives such as, for example, colorants and preservatives.

A further advanatageous characteristic of the invention consists in the produce's being visible to the consumer at the moment of buying.

Further characteristics and advantages of the present invention will better emerge from the detailed description that follows, which represents a preferred but not exclusive embodiment of the said invention.

The procedure, according to the invention, comprises, in order, the following phases:
a) preparation of fruits comprising grading, weighing, peeling and, if necessary, cutting into preestablished shapes;
   initially, a central trunk is cut from the single fruit; the said trunk can be packed whole after, for example, the removal of the core, or it can be cut in transversal round slices, with or without the core, or in other shapes, for example, cubes, chunks, etc.;
b) vacuum-packing, in sealed bags, of a batched quantity of the produce;
   the produce, cut into the desired shape, is inserted in batched quantities in the single bags, which can be in plastic or similar materials, of the barrier type, equipped or not with ultraviolet ray filter; subsequently the vacuum is created with one of the usually used systems in similar cases, such as, for example, the bell-jar method, or by aspiration; the bag is thus closed and sealed by welding after the establishing of a high degree (above 90 per cent) of vacuum;
c) the pasteurising of the sealed vacuum bags at a temperature of about 90 degrees for a time comprised between fifteen and forty minutes;
   the temperature of pasteurisation, according to special needs and situtations, can be above 90 degrees, without reaching the boiling point of water, and below 90 degrees down to a minimum of about 80 degrees.
d) the cooling of the just-pasteurised produce, with cold water jets, and its subsequent introduction into a refrigeration conservation cell at a temperature of between 4 and 8 degrees.

The produce can be conserved in a refrigeration cell for about 90 days.

The conservation is not particularly expensive, inasmuch as it can be done in a normal refrigeration cell at the indicated temperatures, and thus cheaply.

The produce exhibits, at the moment of consumption, an attractive look and maintains more or less intact the characteristics of fresh produce.

## Claims

1. A treatment and packing procedure for fruit retail, in particular for pineapples, characterised in that it comprises, in order, the following phases:
a) preparation of fruits comprising grading, weighing peeling and, if necessary, cutting into preestablished shapes;
b) vacuum-packing, in sealed bags;
c) pasteurisation (using water or steam) of the sealed vacuum bags at a temperature of about 90 degrees with a tolerance of plus or minus 10 degrees, for a time comprised between fifteen and forty minutes;
d) cooling with cold water, and introduction into a refrigeration conservation cell at a temperature of between 4 and 8 degrees.

2. A procedure as in claim 1, characterised in that phase b) envisages vacuum packing in plastic bags or similar of the barrier type or not and equipped with filters for ultraviolet radiation.

3. A procedure as in claim 1, characterised in that phase b) envisages vacuum-packing in bags of composite layered material, between which at least one stratus of metallic material (aluminium) is present.
